# EUROPÄISCHE PATENTSCHRIFT

(11) **EP 2 666 648 B1**
(45) Veröffentlichungstag und Bekanntmachung des Hinweises auf die Patenterteilung: **28.01.2015**
(21) Anmeldenummer: 13167421.0
(22) Anmeldetag: 13.05.2013
(51) Int. Cl.: B60C 11/03

(54) **Fahrzeugluftreifen**
Pneumatic tyres for a vehicle
Pneus de véhicule

(30) Priorität: 23.05.2012 DE 102012104468
(43) Veröffentlichungstag der Anmeldung: 27.11.2013
(73) Patentinhaber: Continental Reifen Deutschland GmbH, 30165 Hannover (DE)
(72) Erfinder: BOGENSCHÜTZ, Peter, 30900 Wedemark (DE); LEIST, Ute, 30173 Hannover (DE); RÖGER, Bernhard, 30823 Garbsen (DE); PFAFF, Daniel, 30938 Burgwedel (DE)
(74) Vertreter: Preusser, Andrea

(56) Entgegenhaltungen:
- WO-A1-2011/055681
- JP-A- 2005 289 122
- US-A1- 2009 038 723
- US-A1- 2009 090 445

## Beschreibung

Die Erfindung betrifft einen Fahrzeugluftreifen mit einem Laufstreifen mit zumindest drei in Umfangsrichtung und im Wesentlichen zick-zack-förmig umlaufenden Umfangsrillen, zumindest zwei im mittleren Bereich des Laufstreifens verlaufenden Profilrippen und jeweils einer schulterseitig verlaufenden Profilrippen, *wobei zumindest eine Profilrippe in radialer Richtung jeweils aus einer unstrukturierten, über den Laufstreifenumfang eine konstante radiale Erstreckunfi aufweisenden Basisrippe und auf diesen aufgesetzten Blöcken besteht.*

*Aus der* WO 2011/055681 A *ist ein Fahrzeugluftreifen der eingangs genannten Art bekannt. Der Reifen soll auf nassem Untergrund eine bessere Performance und eine verbesserte Abriebfestigkeit aufweisen. Im mittigen Laufttreifenbereich sind drei Profilrippen angeordnet. die durch schmale und seichte Quernuten zusätzlich blockartig strukturiert sind.*

Fahrzeugluftreifen *mit Profilrippen* sind in unterschiedlichen Ausführungsvarianten bekannt. Bekannt sind ferner Laufstreifen, deren Profil sich aus einer Kombination aus Profilrippen und Blockreihen zusammensetzt und Laufstreifen, die ausschließlich aus Blockreihen bestehen. Laufstreifen, die Profilrippen aufweisen, sind zusätzlich mit Querrillen oder Quereinschnitten und dergleichen versehen. Dadurch werden Querkanten zur Verfügung gestellt, welche für den Nassgriff des Laufstreifens wichtig sind. Ein Fahrzeugluftreifen mit einer Anzahl von in Umfangsrichtung verlaufenden Profilrippen ist aus der US 5,769,978 A bekannt. Um die Haltbarkeit des Gürtels in den Randbereichen zu erhöhen, sind bei diesem Reifen die Schulterrippen in einer geringeren Höhe ausgeführt als die anderen Profilrippen, die sich von einer gemeinsamen Einhüllenden umschließen lassen. Aus der EP-A-0 393 012 ist ein LKW-Reifen bekannt, dessen Laufstreifen sich aus einer Anzahl von durch Umfangsnuten voneinander getrennten Blockreihen zusammensetzt. Jeder Block setzt sich aus zwei etwa Parallelogramm förmigen Blockteilen zusammen, die voneinander durch einen schmalen Einschnitt getrennt sind. Ein weiterer Laufstreifen mit mehreren in Umfangsrichtung verlaufenden Blockreihen, die voneinander durch mäanderförmig verlaufende Umfangsnuten getrennt sind, ist aus der DE-U-8809532 bekannt. Die beiden mittig gelegenen Blockreihen sind im Bereich der Mittelumfangsebene, diese übergreifend, derart miteinander verzahnt, dass im Wesentlichen eine Art Mittelrippe gebildet wird, die nur zwischen den aufeinanderfolgenden Profilblöcken jeweils durch eine tiefe schmale Quernut unterteilt ist. Die Profilblöcke sind jeweils mit einer Anzahl von Einschnitten versehen, die in Rillen oder Nuten einmünden. *Aus* US 2009/0090445 A1 *ist ein LKW-Reifen mit einem Laufstreifen mit mindestens drei Profilrippen bekannt, welcher ferner zwei innere und zwei äußere Umfangsrillen aufweist, wobei die Profilrippen durch zueinander parallel verlaufende Quernuten in Profilblöcke gegliedert sind. Am Grund der Quernuten ist jeweils ein in Richtung der Quernuterstreckung verlaufende Einschnitt ausgebildet. Dieser Reifen soll einen gleichmäßigen Abrieb sowie ein verbessertes Traktionsverhalten aufweisen. Die* JP 2005 289122 A *beschreibt einen LKW Reifen mit verbesserten Abriebs- und Nassgriffeigenschaften, welcher zwei mittig im Laufstreifen positiortierte Blockreihen, deren Blöcke durch zickzackförmige Quernuten getrennt sind, aufweist.*

In Querrichtung verlaufende Einschnitte und Querrillen, welche in Umfangsnuten münden, sowie die derart durch Einschnitte und Querrillen gebildeten Blockecken sind bei höheren Beanspruchungen der Reifen, wie sie beispielsweise auf schlechten, unebenen Straßenbelägen, unter hohen Temperaturen oder unter hoher Last, auftreten können, anfällig für das Entstehen von Einrissen und in Folge der Einrisse von Ausbrüchen oder Abblätterungen von Gummimaterial sind.

Der Erfindung liegt somit die Aufgabe zugrunde, bei einem Fahrzeugluftreifen der eingangs genannten Art das Auftreten der erwähnten Schäden wirkungsvoll zu verhindern.

Gelöst wird die gestellte Aufgabe erfindungsgemäß dadurch, dass *die der Umfangsrichtung zugeordneten Kanten der Blöcke gegenüber den in Umfangsrichtung verlaufenden Begrenzungskanten der Basisrippen nach innen versetzt sind,* wobei die Basisrippc, in Draufsicht betrachtet, an der bzw. den die Profilrippe begrenzenden Umfangsrille(n) die Blockstruktur überragt, wobei sämtliche oder nahezu sämtliche von der bzw. den Umfangsrille(n) bzw. der Basisrippe und der Blockstruktur gebildeten Eckbereiche gerundet sind..

Diese Maßnahmen verhindern wirkungsvoll das Entstehen der erwähnten Schäden in Profilrippen im Laufstreifen der Reifen, wobei nach wie vor die für einen guten Nassgriff, ein gutes Aquaplaningverhalten, die Traktion, das Bremsverhalten und das Handling erforderlichen Profilstt`ukturen vorhanden sind.

Bei einer bevorzugten Ausführungsform der Erfindung setzen sich die Profilrippen im mittleren Bereich des Laufstreifens und/oder die schulterseitig verlaufenden Profilrippen in radialer Richtung jeweils aus einer unstrukturierten Basisrippe und einer auf dieser aufgesetzten Blockstruktur zusammen. Je nach Reifentyp, Reifendimension und Einsatzzweck der Reifen kann es vorteilhaft sein, entweder nur die Profilrippen im mittleren Bereich des Laufstreifens oder nur die Profilrippen in den seitlichen Bereichen des Laufstreifens oder sämtliche Profilrippen erfindungsgemäß auszuführen.

Eine weitere Maßnahme, die einem Entstehen von Einrissen, Ausbrüchen und dem Abblättern von Gummimaterial entgegenwirkt, besteht darin, dass in der Profilrippe bzw. der Blockstruktur Einschnitte ausgebildet sind, welche sämtlich bzw. nahezu sämtlich ausschließlich innerhalb der Profilrippe bzw. der Blockstruktur verlaufen. Diese Einschnitte stellen für den Nassgriff des Laufstreifens wichtige Querkanten zur Verfügung. In diesem Zusammenhang ist es ferner vorteilhaft, wenn die Einschnitte in Draufsicht im Wesentlichen einen gewinkelten Verlauf mit stumpfen Winkeln, insbesondere einen flach V-förmigen Verlauf aufweisen.

Weitere Kanten für guten Nassgriff und ein gutes Traktionsverhalten des Reifens werden durch die Zick-Zack-Form der Umfangsrillen zur Verfügung gestellt. Diesbezüglich ist es daher günstig, wenn die Begrenzungskanten der Basisrippen die Zick-Zack-Form der Umfangsrillen bestimmen und sich aus einer Abfolge von jeweils einem längeren und einem kürzeren Abschnitt zusammensetzen. Auch die aufgesetzte Blockstruktur stellt Querkanten, zumindest über einen gewissen Laufstreifenabrieb, zur Verfügung. Für eine ausgewogene Profilsteifigkeit ist es von Vorteil, wenn die Blockstruktur in den mittleren Profilrippen von Blöcken gebildet ist, die entsprechend der Zick-Zack-Form der Begrenzungskanten der Profilrippen in Umfangsrichtung über jeweils vier Abschnitte der Begrenzungskanten verlaufen und wenn die Blockstruktur in den schulterseitigen Profilrippen jeweils von blockartigen Profilelementen gebildet ist, welche entsprechend der Zick-Zack-Form der Begrenzungskante der Basisrippe zur benachbarten Umfangsrille sich entlang der längeren Abschnitte der Begrenzungskante erstrecken und voneinander durch kurze sacknutartige Einbuchtungen getrennt sind.

Die Abstütz- und Verstärkungswirkung der Basisrippe(n) auf das Laufstreifenprofil ist dann besonders effektiv, wenn die Höhe der Basisrippe(n) zwischen 70 % und 80 % der Profiltiefe beträgt.

Das Auftreten von Kerbwirkungen an den Eckbereichen der Blockstruktur und der Rippenstruktur wird vor allem dann wirkungsvoll unterbunden, wenn diese Eckbereiche mit einem Radius von 2 mm bis 4 mm gerundet sind.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines Laufstreifens,
Fig. 2 einen Schnitt entlang der Linie II-II der Fig. 1 und
Fig. 3 einen Schnitt entlang der Linie III-III der Fig. 1.

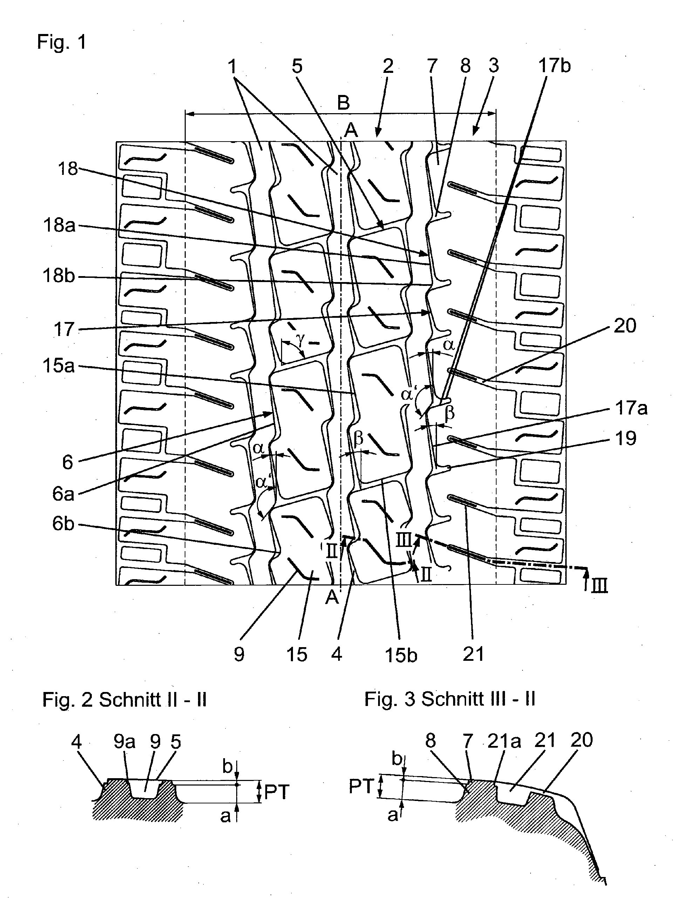

Der in Fig. 1 gezeigte Laufstreifen eines Fahrzeugluftreifens ist besonders gestaltet, um das Auftreten von Einrissen und nachfolgend das Entstehen von Ausbrüchen bzw. das Abblättern von Gummimaterial weitgehend zu vermeiden. Solche Schäden, die üblicherweise als "Cut and Chip" bezeichnet werden, treten in Laufstreifen vor allem dann auf, wenn die Reifen auf schlechten, unebenen Straßenbelägen, unter hohen Temperaturen oder unter zu hoher Last eingesetzt werden. Der über die Breite B verlaufende, bodenberührende Teil des Laufstreifen entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

Fig. 1 zeigt beispielhaft einen Laufstreifen mit drei in Umfangsrichtung umlaufenden Umfangsrillen 1 mit beim gezeigten Beispiel übereinstimmender Ausführung. Die Umfangsrillen 1 verlaufen in einer Zick-Zack-Form, die noch beschrieben wird, wobei die Umfangsrillen 1 in Umfangsrichtung gegeneinander geringfügig versetzt sind. Eine der Umfangsrillen 1 verläuft entlang des Reifenäquators A-A und begrenzt zwei in Umfangsrichtung umlaufende Profilrippen 2, die ihrerseits von je einer der weiteren Umfangsrillen 1 begrenzt sind. Diese Umfangsrillen 1 trennen die Profilrippen 2 von jeweils einer schulterseitigen Profilrippe 3.

Wie Fig. 1 und die Schnittdarstellung in Fig. 2 zeigen, setzt sich jede Profilrippe 2 aus einer Basisrippe 4 mit auf diesen aufgesetzten Blöcken 5 geringer Höhe zusammen. Jede Basisrippe 4 weist eine über den Laufstreifenumfang konstante radiale Erstreckung auf, sodass ihre Höhe a, vom tiefsten Punkt der Umfangsrillen 1 ermittelt, zwischen 70 und 80 % der Tiefe P_{T} - dies ist die maximale Profiltiefe, welche der Tiefe der Umfangsrillen 1 entspricht - beträgt. Die radiale Erstreckung der Blöcke 5 bzw. deren Höhe b, von der äußeren oberen Kante der Basisrippe 4 ermittelt, beträgt demnach zwischen 20 und 30 % der Profiltiefe P_{T}. Die in Umfangsrichtung verlaufenden Begrenzungskanten 6 der Basisrippen 4 verlaufen im Wesentlichen entlang eines Zick-Zack-Weges mit längeren Abschnitten 6a, welche unter einem spitzen Winkel α von einigen wenigen Grad, insbesondere 2° bis 10°, zur Umfangsrichtung verlaufen. Die zweiten Abschnitte 6b der Kanten 6 sind gegensinnig zu den Abschnitten 6a zur Umfangsrichtung geneigt und verlaufen unter einem Winkel α' von etwa 140° bis 170° zur Umfangsrichtung. Die Übergänge zwischen den Abschnitten 6a und 6b sind sämtlich abgerundet. Die schulterseitigen Profilrippen 3 weisen blockartige Profilelemente 7 auf, welche auf je eine Basisrippe 8 aufgesetzt sind, wobei die radialen Erstreckungen der Elemente 7 und der Basisrippe 8 den beschriebenen Höhen a und b entsprechen.

Die aufgesetzten Blöcke 5 weisen eine Umfangserstreckung auf, die ungefähr dem Doppelten ihrer Quererstreckung entspricht und verlaufen in Umfangsrichtung im Wesentlichen jeweils über zwei Abschnitte 6a der Begrenzungskanten 6. Ihre äußere Form ist im Wesentlichen der Zick-Zack-Form der Begrenzungskanten 6 angepasst, sodass sie sich aus zwei in Reifenquerrichtung geringfügig versetzten Blockteilen 15 zusammensetzen. Die Blockteile 15 sind im Wesentlichen Rechtecke mit abgerundeten Eckbereichen und abgerundeten Übergangsbereichen. Die der Umfangsrichtung zugeordneten Kanten 15a der Blockteile 15 verlaufen unter einem Winkel β zur Umfangsrichtung, welcher um 1° bis 5° größer ist als der Winkel α der Abschnitte 6a der Begrenzungskanten 6. Die Blöcke 5 sind, in Draufsicht betrachtet, auf die Profilrippen 2 derart aufgesetzt, dass jeweils zwei der einander diagonal gegenüberliegenden Eckbereiche der Blockteile 15 mit den kurzen Abschnitten 6b der Begrenzungskanten 6 zusammentreffen. Hier liegen somit lokal Stellen vor, wo die Blöcke 5 von der Basisrippe 4 nicht abgesetzt sind. Bei einer möglichen, nicht gezeigten Ausführung kann auch an diesen Eckbereichen eine "Trennung" in Basisrippe und aufgesetzte Blöcke vorliegen. Die die Blockteile 5 in Axialrichtung begrenzenden Kanten 15b verlaufen unter einem Winkel γ von 70° bis 80° zur Umfangsrichtung. Die Kanten 15b von in Umfangsrichtung aneinander anschließenden Blöcken 5 verlaufen in einem geringen Abstand von 1 bis 2 mm parallel zueinander.

Jeder Blockteil 15 ist mit einem in Draufsicht im Wesentlichen flach V-förmig verlaufenden Einschnitt 9 versehen. Die Einschnitte 9 verlaufen ausschließlich innerhalb des Blockes 5 und münden daher nicht an den Blockkanten nach außen. Wie Fig. 2 zeigt, sind die äußeren Endabschnitte 9a der Einschnitte 9 stufenförmig angehoben, analog zur Ausbildung der Basisrippe 4.

Wie bereits erwähnt, weisen auch die schulterseitigen Profilrippen 3 jeweils eine Basisrippe 8 auf. Die Basisrippe 8 begrenzt mit ihrer Kante 18, die sich aus längeren Abschnitten 18a und kürzeren Abschnitten 18b zusammensetzt, die benachbarte Umfangsrille 1, analog zur Begrenzungskante 6, mit den Winkeln α und α' relativ zur Umfangsrichtung. Die von der Basisrippe 8 abgesetzt verlaufenden Kanten 17 der blockartigen Profilelemente 7 weisen, in analoger Ausführung zu den Blöcken 5, kurze Abschnitte 17b und längere Abschnitte 17a auf, die den Abschnitten 18a zugeordnet sind und unter dem Winkel β zur Umfangsrichtung verlaufen. Bei den gerundeten Übergangsbereichen zwischen den Abschnitten 17a und 17b sind die Profilelemente 7 von kurzen sacknutartigen Einbuchtungen 19 begrenzt. Sämtliche Eckbereiche der blockartigen Profilelemente 7 sind gerundet und im Wesentlichen rechtwinkelige Eckbereiche. Etwa im mittleren Bereich jedes blockartigen Profilelementes 7 und in einem Abstand von den Begrenzungskanten 17 befinden sich die geschlossenen laufstreifeninnenseitigen Enden von Querrillen 20, die über den bodenberührenden Teil des Laufstreifens hinaus verlaufen.

Wie die Schnittdarstellung in Fig. 3 zeigt, sind die Querrillen 20 bis auf einen schmalen, tieferen Einschnitt 21 am laufstreifeninnenseitigen Endabschnitt seicht ausgeführt. Der Einschnitt 21 endet mit einer Stufe 21a, welche analog zum abgesetzten Bereich zwischen der Basisrippe 8 und den Elementen 7 ausgeführt ist.

Die Erfindung ist auf das dargestellte und beschriebene Ausführungsbeispiel nicht beschränkt. Erfindungsgemäß ausgeführte Fahrzeugluftreifen können beispielsweise mehr als vier Profilrippen aufweisen.

### Bezugszeichenliste

- 1: Umfangsrille
- 2: Profilrippe
- 3: schulterseitige Profilrippe
- 4: Basisrippe
- 5: Block
- 6: Kante
- 6a: Abschnitt
- 6b: Abschnitt
- 7: blockartiges Profilelement
- 8: Basisrippe
- 9: Einschnitt
- 9a: Endabschnitt
- 15: Blockteil
- 15a: Kante
- 15b: Kante
- 17: Begrenzungskante
- 17a: Abschnitt
- 17b: Abschnitt
- 18: Kante
- 18a: Abschnitt
- 18b: Abschnitt
- 19: Einbuchtung
- 20: Querrillen
- 21: Einschnitt
- 21a: Stufe
- a: Höhe
- b: Höhe
- P_{T}: Profiltiefe
- α: Winkel
- α': Winkel
- β: Winkel
- γ: Winkel

## Patentansprüche

1. Fahrzeugluftreifen mit einem Laufstreifen mit zumindest drei in Umfangsrichtung und im Wesentlichen zick-zack-förmig umlaufenden Umfangsrillen (1), zumindest zwei im mittleren Bereich des Laufstreifens verlaufenden Profilrippen (2) und jeweils einer schulterseitig verlaufenden Profilrippe (3), wobei zumindest eine Profilrippe (2, 3) in radialer Richtung jeweils aus einer unstrukturierten über den Laufstreifenumfang eine konstante radiale Erstreckung aufweisenden Basisrippe (4, 8) und auf diesen aufgesetzten Blöcken (5) besteht,
**dadurch gekennzeichnet,**
**dass** *die der Umfangsrichtung zugeordneten Kanten (15a, 15b, 17) der Blöcke (5) gegenüber den in Umfangsrichtung verlaufenden Begrenzungskanten (6) der Basisrippe (4, $) nach innen versetzt sind,* wobei die Basisrippe (4, 8), in Draufsicht betrachtet, an der bzw. den die Profilrippe (2, 3) begrenzenden Umfangsrille(n) (1) die Blockstruktur überragt, wobei sämtliche oder nahezu sämtliche von der bzw. den Umfangsrille(n) (1) bzw. der Basisrippe (4, 8) und der Blockstruktur gebildeten Eckbereiche gerundet sind.

2. Fahrzeugluftreifen nach Anspruch 1, **dadurch gekennzeichnet, dass** sich die Profilrippen (2) im mittleren Bereich des Laufstreifens und/oder die schulterseitig verlaufenden Profilrippen (3) in radialer Richtung jeweils aus einer unstrukturierten Basisrippe (4, 8) und einer auf dieser aufgesetzten Blockstruktur zusammensetzen.

3. Fahrzeugluftreifen nach Anspruch 1 oder 2, **dadurch gekennzeichnet, dass** in der Profilrippe (2, 3) bzw. der Blockstruktur Einschnitte (9, 21) ausgebildet sind, welche sämtlich bzw. nahezu sämtlich ausschließlich innerhalb der Profilrippe (2, 3) bzw. der Blockstruktur verlaufen.

4. Fahrzeugluftreifen nach einem der Ansprüche 1 bis 3, **dadurch gekennzeichnet, dass** Begrenzungskanten (6, 18) der Basisrippen (4, 8) die Zick-Zack-Form der Umfangsrillen (1) bestimmen und sich aus einer Abfolge von jeweils einem längeren und einem kürzeren Abschnitt (6a, 6b, 18a, 18b) zusammensetzen.

5. Fahrzeugluftreifen nach einem der Ansprüche 1 bis 4, **dadurch gekennzeichnet, dass** die Blockstruktur in den mittleren Profilrippen (2) von Blöcken (5) gebildet ist, die entsprechend der Zick-Zack-Form der Begrenzungskanten (6) der Profilrippen (2, 3) in Umfangsrichtung über jeweils vier Abschnitte (6a, 6b) der Begrenzungskanten (6) verlaufen.

6. Fahrzeugluftreifen nach einem der Ansprüche 1 bis 4, **dadurch gekennzeichnet, dass** die Blockstruktur in den schulterseitigen Profilrippen (3) jeweils von blockartigen Profilelementen (7) gebildet ist, welche entsprechend der Zick-Zack-Form der Begrenzungskante (18) der Basisrippe (8) zur benachbarten Umfangsrille (1) sich entlang der längeren Abschnitte (18a) der Begrenzungskante (18) erstrecken und voneinander durch kurze sacknutartige Einbuchtungen (19) getrennt sind.

7. Fahrzeugluftreifen nach einem der Ansprüche 1 bis 6, **dadurch gekennzeichnet, dass** die Höhe der Basisrippe(n) (4, 8) zwischen 70 % und 80 % der Profiltiefe (P_{T}) beträgt.

8. Fahrzeugluftreifen nach einem der Ansprüche 1 bis 7, **dadurch gekennzeichnet, dass** die von der Blockstruktur und der Rippenstruktur gebildeten Eckbereiche mit einem Radius von 2 mm bis 4 mm gerundet sind.

9. Fahrzeugluftreifen nach einem der Ansprüche 3 bis 8, **dadurch gekennzeichnet, dass** die Einschnitte (9, 21) in Draufsicht im Wesentlichen einen gewinkelten Verlauf mit stumpfen Winkeln, insbesondere einen flach V-förmigen Verlauf, aufweisen.

## Claims

1. Pneumatic vehicle tyre having a tread strip with at least three circumferential grooves (1) which run around it in the circumferential direction and in a substantially zigzag-shaped manner, at least two profile ribs (2) which run in the central region of the tread strip, and in each case one profile rib (3) which runs on the shoulder side, at least one profile rib (2, 3) consisting in the radial direction in each case of an unstructured base rib (4, 8) which has a constant radial extent over the tread strip circumference and blocks (5) which are placed onto it, **characterized in that** those edges (15a, 15b, 17) of the blocks (5) which are assigned to the circumferential direction are offset inwards with respect to those bounding edges (6) of the base rib (4, 8) which run in the circumferential direction, the base rib (4, 8) protruding beyond the block structure, as viewed in plan view, at the circumferential groove or grooves (1) which delimit/delimits the profile rib (2, 3), all or virtually all of the corner regions which are formed by the circumferential groove or grooves (1) and/or the base rib (4, 8) and the block structure being rounded.

2. Pneumatic vehicle tyre according to Claim 1, **characterized in that** the profile ribs (2) in the middle region of the tread strip and/or the profile ribs (3) which run on the shoulder side consist in the radial direction in each case of an unstructured base rib (4, 8) and a block structure which is placed on it.

3. Pneumatic vehicle tyre according to Claim 1 or 2, **characterized in that** indents (9, 21) are formed in the profile rib (2, 3) and the block structure, which indents (9, 21) all or virtually all run exclusively within the profile rib (2, 3) and the block structure.

4. Pneumatic vehicle tyre according to one of Claims 1 to 3, **characterized in that** bounding edges (6, 18) of the base ribs (4, 8) define the zigzag shape of the circumferential grooves (1) and consist of a sequence of in each case one longer and one shorter section (6a, 6b, 18a, 18b).

5. Pneumatic vehicle tyre according to one of Claims 1 to 4, **characterized in that** the block structure in the middle profile ribs (2) is formed by blocks (5) which, in a manner which corresponds to the zigzag shape of the bounding edges (6) of the profile ribs (2, 3), run in the circumferential direction over in each case four sections (6a, 6b) of the bounding edges (6).

6. Pneumatic vehicle tyre according to one of Claims 1 to 4, **characterized in that** the block structure in the shoulder-side profile ribs (3) is formed in each case by block-like profile elements (7) which, in a manner which corresponds to the zigzag shape of the bounding edge (18) of the base rib (8) with respect to the adjacent circumferential groove (1), extend along, the longer sections (18a) of the bounding edge (18) and are separated from one another by short blind channel-like indentations (19).

7. Pneumatic vehicle tyre according to one of Claims 1 to 6, **characterized in that** the height of the base rib or ribs (4, 8) is between 70% and 80% of the profile depth (P_{T}).

8. Pneumatic vehicle tyre according to one of Claims 1 to 7, **characterized in that** the corner regions which are formed by the block structure and the rib structure are rounded with a radius of from 2 mm to 4 mm.

9. Pneumatic vehicle tyre according to one of Claims 3 to 8, **characterized in that** the indents (9, 21) have, in plan view, substantially an angled course with obtuse angles, in particular a flat V-shaped course.

## Revendications

1. Pneu de véhicule comprenant une bande de roulement avec au moins trois gorges périphériques (1) s'étendant circonférentiellement dans la direction périphérique essentiellement en zigzag, au moins deux arêtes profilées (2) s'étendant dans la région centrale de la bande de roulement et à chaque fois une arête profilée (3) s'étendant du côté de l'épaulement, au moins une arête profilée (2, 3) dans la direction radiale se composant à chaque fois d'une arête de base (4, 8) non structurée, présentant une étendue radiale constante sur la périphérie de la bande de roulement et de blocs (5) placés sur celle-ci, **caractérisé en ce que**
les bords (15a, 15b, 17) des blocs (5) associés à la direction périphérique sont décalés vers l'intérieur par rapport aux bords limites (6) de l'arête de base (4, 8) s'étendant dans la direction périphérique, l'arête de base (4, 8), considérée en vue de dessus, dépassant au-delà de la structure de blocs au niveau de la ou des gorges périphériques (1) délimitant l'arête profilée (2, 3), toutes ou pratiquement toutes les régions de coin formées par la ou les gorges périphériques (1) ou l'arête de base (4, 8) et la structure de blocs étant arrondies.

2. Pneu de véhicule selon la revendication 1, **caractérisé en ce que** les arêtes profilées (2) dans la région centrale de la bande de roulement et/ou les arêtes profilées (3) s'étendant du côté de l'épaulement dans la direction radiale se composent à chaque fois d'une arête de base non structurée (4, 8) et d'une structure de blocs placée sur celle-ci.

3. Pneu de véhicule selon la revendication 1 ou 2, **caractérisé en ce que** dans l'arête profilée (2, 3) ou la structure de blocs sont réalisées des entailles (9, 21) qui s'étendent toutes ou pratiquement toutes exclusivement à l'intérieur de l'arête profilée (2, 3) ou de la structure de blocs.

4. Pneu de véhicule selon l'une quelconque des revendications 1 à 3, **caractérisé en ce que** des bords limites (6, 18) des arêtes de base (4, 8) déterminent la forme en zigzag des gorges périphériques (1) et se composent d'une alternance d'une portion respectivement plus longue et d'une portion respectivement plus courte (6a, 6b, 18a, 18b) en succession.

5. Pneu de véhicule selon l'une quelconque des revendications 1 à 4, **caractérisé en ce que** la structure de blocs est formée de blocs (5) dans les arêtes profilées centrales (2), lesquels s'étendent suivant la forme en zigzag des bords limites (6) des arêtes profilées (2, 3) dans la direction périphérique sur quatre portions respectives (6a, 6b) des bords limites (6).

6. Pneu de véhicule selon l'une quelconque des revendications 1 à 4, **caractérisé en ce que** la structure de blocs dans les arêtes profilées (3) du côté de l'épaulement est formée à chaque fois d'éléments profilés de type blocs (7) qui s'étendent suivant la forme en zigzag du bord limite (18) de l'arête de base (8) jusqu'à la gorge périphérique adjacente (1) le long des portions plus longues (18a) du bord limite (18) et sont séparés les uns des autres par des renfoncements courts (19) de type rainure borgne.

7. Pneu de véhicule selon l'une quelconque des revendications 1 à 6, **caractérisé en ce que** la hauteur de la ou des arêtes de base (4, 8) est comprise entre 70 % et 80 % de la profondeur du profilé (P_{T}).

8. Pneu de véhicule selon l'une quelconque des revendications 1 à 7, **caractérisé en ce que** les régions de coin formées par la structure de blocs et la structure d'arêtes sont arrondies avec un rayon de 2 mm à 4 mm.

9. Pneu de véhicule selon l'une quelconque des revendications 3 à 8, **caractérisé en ce que** les entailles (9, 21), en vue de dessus, présentent essentiellement une allure angulaire avec des angles obtus, en particulier une allure en forme de V aplati.
